# EUROPEAN PATENT SPECIFICATION

(11) **EP 2 540 171 B1**
(45) Date of publication and mention of the grant of the patent: **04.08.2021**
(21) Application number: 12174153.2
(22) Date of filing: 28.06.2012
(51) Int. Cl.: A23N 15/00, A23N 15/04, B65G 47/248

(54) **Device and method for processing agricultural products**
Vorrichtung und Verfahren zur Verarbeitung landwirtschaftlicher Produkte
Dispositif et procédé pour le traitement des produits agricoles

(30) Priority: 28.06.2011 NL 2007003
(43) Date of publication of application: 02.01.2013
(73) Proprietor: GEGE Machinebouw B.V., 5464 RA Veghel (NL)
(72) Inventor: Van Asseldonk, Johannes Maria, 5400 AG Uden (NL)
(74) Representative: Hylarides, Paul Jacques

(56) References cited:
- EP-A1- 0 894 441
- WO-A1-01/33981
- WO-A1-91/02450
- WO-A1-03/092354
- NL-A- 9 301 363
- None

## Description

The present invention relates to a device for processing agricultural products, wherein the product generally comprises a head and a stem, the device comprising a transport track for transporting products from a feed to a processing unit. The invention also relates to an assembly of such a device. The invention also relates to a method for processing agricultural products.

The Netherlands patent publication NL 1036880 describes a machine for cutting mushrooms, more particularly severing the stems from the heads of the mushrooms. The machine has two endless, string-like transport members or transport strings for jointly supporting and transporting the heads of the mushrooms. The object is that the stems of the mushrooms extend here in downward direction between the transport strings. In order to achieve this a set of endless conveyor belts is arranged immediately on the outer side the two mutually adjacent transport strings. The conveyor belts provide support for the mushrooms whose stems do not extend downward between the string-like transport members. Because the belt-like transport members are driven at different speeds, there is a chance that at a certain point the stems of the products will come to lie in the intermediate space between the transport strings (and the conveyor belts placed thereagainst) . The mushrooms now rest only with their heads on the transport strings and are transported further for further processing.

A drawback of the known machine is however that the stems sometimes do not come to lie in said intermediate space between the two string-like transport members. There is for instance a chance a head of a mushroom being caught in said intermediate space so that no or too little rotation of the mushroom takes place to allow the stem to eventually slide into the intermediate space. WO0133981A1, EP0894441A1, WO03092354A1 and NL9301363 disclose other devices for processing mushrooms.

The present invention has for its object to provide an improved device and method, wherein at least one of the stated drawbacks of the known machine is obviated.

It is also the object of the invention to provide a device and assembly and method in which such agricultural products can be arranged with relatively great certainty in the desired upright position during transport.

The invention concerns a device for processing agricultural products according to the combination of features of appended claim 1.

In a further embodiment the first speed is higher than the second speed in a first time interval and the second speed is higher than the first speed in a second time interval. The time intervals can be successive and the change in speed can be repeated periodically. The speeds are for instance switched every 1 to 2 seconds. The products can in this way be better distributed over the transport members and/or the products can be processed more effectively.

The device comprises first and second drive means for driving respectively the first and second transport member (or a first set of transport members and a second set of transport members) as well as a control for driving the (sets of) transport members at different speeds. By driving the transport members at different speeds it is possible to turn the products transported on the members.

According to an embodiment, the control is adapted to enable preferably continuous variation of the speed of at least one of the transport members. A better turning of the products can be realized by variation of the speed, preferably a jolting variation thereof, so that the products are generally more likely to be positioned in correct manner in the receiving space.

In a further embodiment the control unit is adapted to vary the speed of the first and second transport members between minimum and maximum speeds. The maximum speed of the first transport member can here be chosen so as to be higher than the maximum speed of the second transport member.

In a determined embodiment said speeds and/or the rate of speed variation of the transport members can take an individually adjustable form so that an optimal processing of the products can be realized in each case. In a particularly advantageous embodiment the control is adapted to drive at least one of the transport members in jolting manner. One product at a time can hereby be turned to some extent until the desired end position has been reached.

The transport members take an elongate form. According to the invention, the transport members take the form of a belt, string or cable.

The transport members can be driven continuously. This means that turning of the product can be realized during the physical displacement thereof in the direction of transport. The products can thus be processed at relatively high speed so that a relatively high handling capacity can be obtained.

According to an embodiment, the intermediate space or the intermediate spaces between the receiving members and/or between a receiving member and an adjacent transport member is or are smaller than the intermediate space between adjacent transport members. This ensures that, if a head of a product comes to lie in the receiving space, the head is held back by the receiving members and cannot therefore fall out of the receiving space.

The processing comprises here of transporting the products and ordering thereof during transport. This makes it possible to present supplied products in a desired mutual arrangement to one or more further processing units, such as a cutting unit, cleaning unit or the like, so that they can be further processed more effectively by the processing units.

Jointly supported is here understood to mean that the products can be substantially supported during transport by two or more of the belt-like transport members simultaneously. A recessed receiving space is here understood to mean an imaginary space defined by the longitudinal edges of the belt-like transport members and the receiving member. The width of the receiving space is determined by the distance between the opposite longitudinal edges of the belt-like transport members, while the depth of the receiving space is determined by the height difference between the belt-like transport members and the receiving member. The desired dimensions of the receiving space depend on, among other factors, the shape and/or size of the products to be transported. The receiving space is wide enough to allow at least the heads of the products to drop therein so that they can be arranged at a desired lateral position. The placing of the receiving member relative to the transport members is such that the heads cannot pass through the openings in the receiving space. When a stem has been rotated downward through an opening, the product is situated in the desired upright position, i.e. with the head at the top and the stem hanging downward, so that it can be presented for further processing thereof.

According to an embodiment, level adjusting means are provided for adjusting the height level of the receiving member relative to the belt-like transport members. This height level defines the depth of the imaginary receiving space and makes it possible for the processing device to be made suitable for processing different types, shapes and dimensions of the products.

The device is preferably embodied for the purpose of turning the stems of the products so that they come to lie substantially parallel to the transport members. In this situation the product has a slightly recessed position relative to the upper side of the transport members so that the products are generally not rotated further (about an upright axis) because the stem is held against the side of the transport members. In this situation the stem of the product will at a given moment (i.e. where no further receiving members are situated under the transport members) rotate downward under the influence of the force of gravity. This is the position required for further processing of the product.

The level difference between the receiving member and the upper side of the transport members is selected so as to be large enough to prevent rotation of the products about an upright axis, but small enough to enable rotation about an lying axis. In applications where the products to be processed are formed by mushrooms, the level difference between the receiving member and the upper side of the transport members can amount to between about 10 and 20 mm. The products can already have been pre-sorted to size. Said values therefore generally differ per sorting. The width of the intermediate space between adjacent transport members can likewise amount to between about 20 and 35 mm.

In embodiments of the invention the device comprises pivotable elements positioned above the transport members. The pivotable elements can be arranged here such that, when a product is oriented with the stem upward, the stem of the product is urged downward as a result of the force exerted thereon. The products can be cut better in the end position.

In determined embodiments the intermediate space between the transport members forms a completely open space in which parts of the products can extend. No further structural parts which could make the arrangement of the products more difficult are situated in this intermediate space. In other embodiments the device comprises one or more receiving members, such as receiving strings, receiving belts, receiving cables and similar receiving parts, extending at least partially between the transport members. The receiving members extend at a lower level than the upper sides of the transport members for the purpose of forming a recessed receiving space in which the heads of the products can be received.

The transport member, in particular the string-like member, can be driven with drive means. This can take place at substantially the same speed as at least one of the belt-like transport members. In determined embodiments a receiving member co-displaces with a transport member. In these embodiments a separate drive for the receiving member can be dispensed with. According to an embodiment of the invention, the drive means of the receiving members are therefore formed by the drive means of the transport members.

In a further embodiment the device comprises a sensor for generating a first signal representative of the height and/or length of a product transported therealong, a processing unit for processing the first signal, comparing the height and/or length to one or more preset maximum values and generating a second signal representative of the result of the comparison(s). If it is for instance ascertained that the maximum height and/or length is exceeded, for instance because a number of products are adhered together, possible measures can be taken on the basis of the second signal. Provided in a determined embodiment are removing means for removing the product in question from the transport track. The removing means can for instance comprise a blow nozzle for generating a fluid flow (for instance air and/or water) with which the relevant product can be blown off the transport track.

Provided according to a further aspect of the invention is an assembly for processing products according to the combination of features of appended claim 13. The assembly can further comprise a feed for individualizing the products and placing thereof on the transport members, for instance in the form of a so-called vibrating feed. The assembly can also comprise a cutting unit for cutting the stems from the products.

Provided according to a further aspect of the invention is a method for processing agricultural products according to the combination of features of appended claim 14.

The method can also comprise of varying the speed, particularly varying the speed in jolting manner, of at least one of the transport members during the further transport.

Further advantages, features and details of the present invention will be elucidated on the basis of the following description of several embodiments thereof. Reference is made in the description to the accompanying figures, in which:
Figure 1 is a top view of an embodiment of an assembly comprising a device according to an embodiment of the invention and a processing unit;
Figure 2 is a side view of the assembly shown in figure 1;
Figure 3 is a cross-section along A-A of the assembly shown in figure 2;
Figure 4 is a cross-section along B-B of the assembly shown in figure 2;
Figure 5 is a cross-section along C-C of the assembly shown in figure 2;
Figure 6 is a cross-section along D-D of the embodiment of the invention shown in figure 2;
Figures 7A-7C show schematic representations of a product at the different transport stages on the transport device;
Figure 8 is a top view of an embodiment of an assembly comprising a device according to a second embodiment of the invention and a processing unit;
Figure 9 is a side view of the assembly shown in figure 8;
Figure 10 is a cross-section along A-A of the assembly shown in figure 5;
Figure 11 is a cross-section along B-B of the assembly shown in figure 5;
Figure 12 is a cross-section along C-C of the assembly shown in figure 5;
Figure 13 is a cross-section along D-D of the embodiment of the invention shown in figure 5;
Figures 14A-14B show schematic representations of a product at the different transport stages on the transport device.

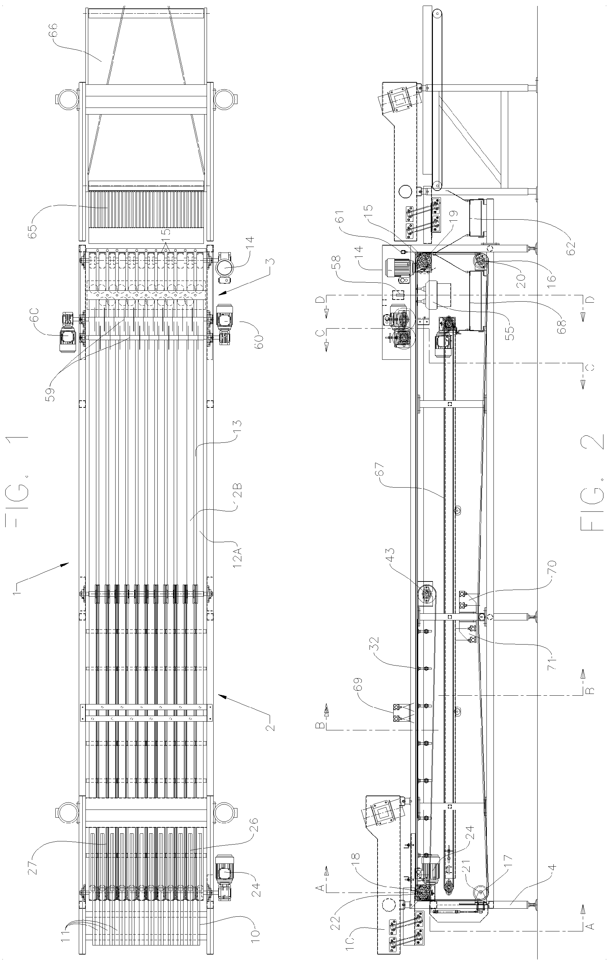

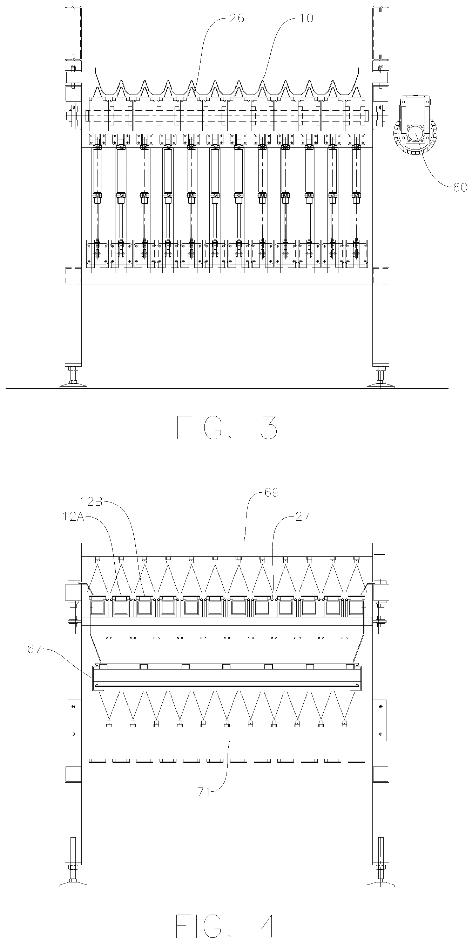

Figures 1-6 show an embodiment of an assembly 1 for processing products, particularly for processing mushrooms. Assembly 1 comprises a device 2 for transporting and ordering supplied products and a cutting unit 3 for separating parts of the products from each other, more particularly cutting the stems from the heads of the products (mushrooms). Assembly 2 further comprises a feed in the form of a vibrating feed 10. Vibrating feed 10 comprises a number of parallel channels 11 along which rows of products can be supplied one at a time. Each channel ensures that products are individualized and then placed on transport device 2. As also described below, the number of channels depends on the number of tracks of transport device 2.

Transport device 2 comprises a frame 4 on which a number of elongate endless conveyor belts 12 are arranged. Eleven conveyor belts 12 are provided in the shown embodiment. Formed between the eleven conveyor belts are ten intermediate spaces 13. Each intermediate space 13 forms a track for transporting a row of products supplied via the feed. In the shown embodiment the transport device thus has ten tracks. It will be apparent that the number of tracks, and thereby the number of conveyor belts 12, can vary. When there is a single row of supplied products it is possible to suffice with two conveyor belts 12. When there are two rows of supplied products, four conveyor belts can be provided, or preferably three conveyor belts wherein the middle conveyor belt forms part of both the first track and the second track. It lies within the reach of the skilled person to vary the number of tracks as required in order to increase or decrease the processing capacity of the assembly.

The endless conveyor belts 12 are guided along a number of rollers 15, 16, 17 and 18 which are connected, optionally fixedly, to respective common shafts 19, 20, 21 and 22. Shafts 19 and 22 are driven respectively by drive motor 14 and drive motor 24.

In the shown embodiment drive motor 14 is connected via the common drive shaft 19 to a number of the rollers 15 such that a set of first conveyor belts 12a is driven thereby. In similar manner drive motor 24 is connected via common drive shaft 22 to a number of rollers 18 so that second drive motor 24 can displace a second set of conveyor belts 12b. The displacement of conveyor belts 12a and 12b can be realized independently of each other. In the shown embodiment the first conveyor belts 12a and 12b further extend alternately relative to each other. In other words, each track is formed by a first conveyor belt 12a and an adjacent second conveyor belt 12b. Because conveyor belts 12a and 12b are driven alternately by motors 14 and 24, the conveyor belts of a determined track can be advanced at different speeds.

At the first section, at the position of the feed onto conveyor belts 12a, 12b using vibrating feed 10, partitions 26 are arranged between the tracks for the purpose of placing the products properly in the track. A number of round receiving strings 27 are also arranged between belts 12a and 12b over the first section in the track. Round strings 27 form two endless transport members. These can be driven with a drive motor, although in determined embodiments the transport members are driven by motors 14,24 of the transport members. Receiving strings 27 are supported by short, height-adjustable guides 32 with which the height of string 27 can be adjusted relative to the height of conveyor belts 12a, 12b.

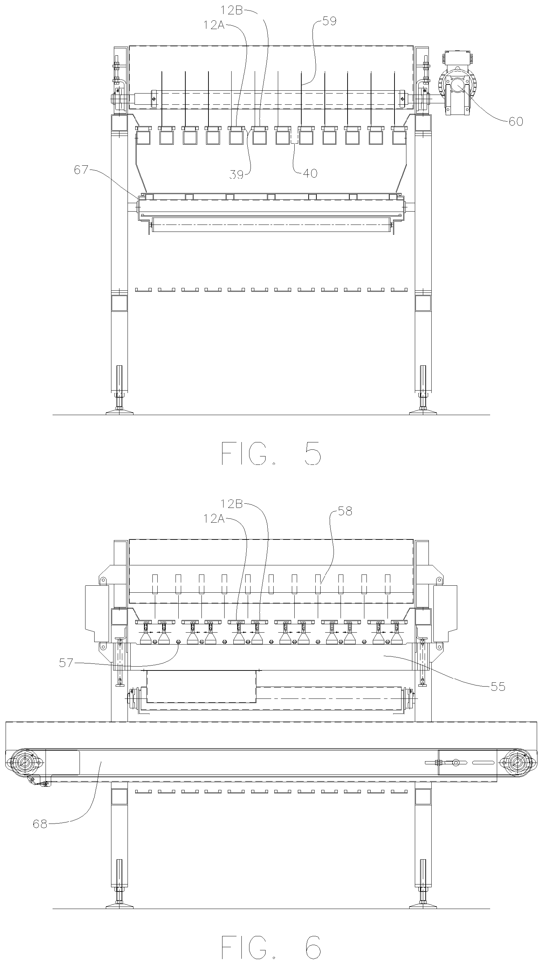

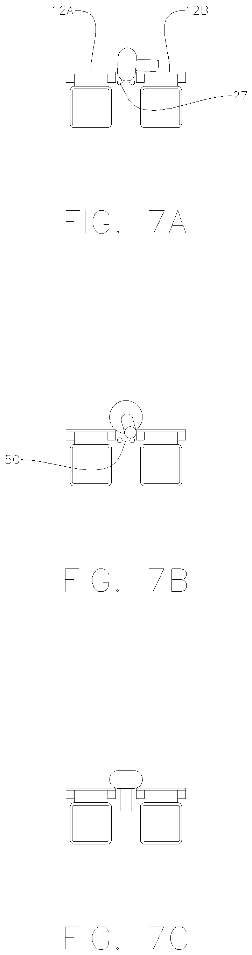

Together with the receiving string 27 situated at a lower height level, the side edges 39 of a set of conveyor belts 12a, 12b define a recessed receiving space 40 (shown with broken lines in figure 5) in which the products, or at least the heads thereof, can be received. The products enter the receiving space via feed 10. The position in which the products come to lie therein cannot be predicted beforehand. Figure 7A shows a possible position.

It is necessary to order the products in a desired end position in the receiving space. This can be realized inter alia by alternately giving conveyor belts 12a and 12b different speeds. A rotating movement is hereby imparted to the products. The receiving strings 27 between belts 12a, 12b ensure that the products do not sink too deeply between the belts, whereby the products still have sufficient space to turn. The products continue to turn until the stems drop into the intermediate space between conveyor belts 12a, 12b. This position is shown in figure 7B.

In the position shown in figure 7B the relevant stem of the product may point forward or rearward. Because the round receiving strings 27 lie at a deeper position, the product cannot turn any further because the stem now presses against side edge 39 of a conveyor belt 12a, 12b and thereby encounters too much resistance to rotate further. As soon as the round receiving strings 27 between conveyor belts 12a, 12b rotate away, so beyond the point at which receiving member 27 is carried away in downward direction via a roller 43, the stems of the products can be hanging wholly downward.

In order to increase the chance of the stems actually hanging downward when the products are transported beyond the end of receiving member 27, in a determined embodiment the control of drive motors 14, 24 of the receiving string can be embodied such that the speed of the conveyor belts varies in each case between an adjustable high and low speed, wherein the high speed of conveyor belts 12a is always higher than that of conveyor belts 12b. In determined further embodiments the time interval at which this takes place is likewise adjustable. It is even possible to choose a short time interval such that there is a jolting adjustment of the speed of conveyor belt 12a, 12b. The result hereof is that the products rotate back a little after each time interval, whereby the products pressed with a stem against the side of a belt 12a or 12b are given the chance to also rotate with the stem downward.

Along the length of substantially the whole transport track the products have enough time to come to lie with their associated stem hanging downward. In the case that a determined product nevertheless does not begin to rotate, in a determined embodiment the associated stem can be severed by cutting knives 59. These cutting knives are driven by motors 60 (figures 1 and 5). The products with the stem hanging downward are cut using a height-adjustable cutting beam 55 which is provided with double cutting knives per track. The driven cutting knives rotate in opposite directions per track, whereby the products are as it were pulled along between the knives. The upper side of cutting beam 55 is kept free of portions of product using blow nozzles 57. The severed portions could accumulate on top of the cutting beam, whereby the passage for the stems could be obstructed. The upper side of cutting beam 55 can be kept clean using blow nozzles 57. The blow nozzles can be operated at a time interval.

It may sporadically be the case that a product is shaped such that the stem thereof does not hang downward. In the case of for instance a mushroom with a thick base, the stem may be so wide that it cannot hang downward because the width is greater than intermediate space 50 or greater than the intermediate distance between longitudinal edges 39 of conveyor belts 12a, 12b. A sensor 58 and a blow nozzle 61 are provided for the purpose of removing these products. Sensor 58 determines the height of the products above conveyor belts 12a, 12b. If the stem of the product hangs downward, the maximum height is that of the maximum height of the head (i.e. of the cap in the case of the mushroom) . If the measured height is found to be higher than a preset maximum cap thickness, the sensor gives the indication that a product is lying incorrectly in the track. This could for instance mean that there is a mushroom with a thick stem lying on its side in the length of the channel, or that several mushrooms have grown together. In order to remove these products from the product flow the above stated blow nozzle 61, which is controlled via a control unit connected to sensor 58, can generate one or more short blasts of air whereby the product in question is blown away in downward direction and is received, for instance by a conveyor belt 62. Instead of or in addition to the height measurement, the sensor (or an additional sensor) can be adapted to measure the length of the products. If for instance a length is measured greater than the maximum cap diameter, there is a great chance that a mushroom is extending in lengthwise direction between the belts. In such cases the sensor can also generate an indication (signal) that the product is lying on the track incorrectly.

The cut products are, at least if necessary, then received on a portion vibrator 65, whereby all small portions are separated from the rest of the products. The portions are also received on the above stated conveyor belt 62. Downstream of the portion vibrator 65 the cut products move onto a belt 66 and can then be further processed, for instance filled to weight in a crate. Portions falling between belts 12a, 12b during transport can be received on an underlying conveyor belt 67. All portions are collected together with the severed stems on a further conveyor belt 68.

If desired, the device can be provided with an automatic cleaning of the conveyor belts, for instance by means of a spraying system 69 provided on the upper side and/or a spraying system 70 provided on the underside. A spraying system 71 can also be provided for belt 67.

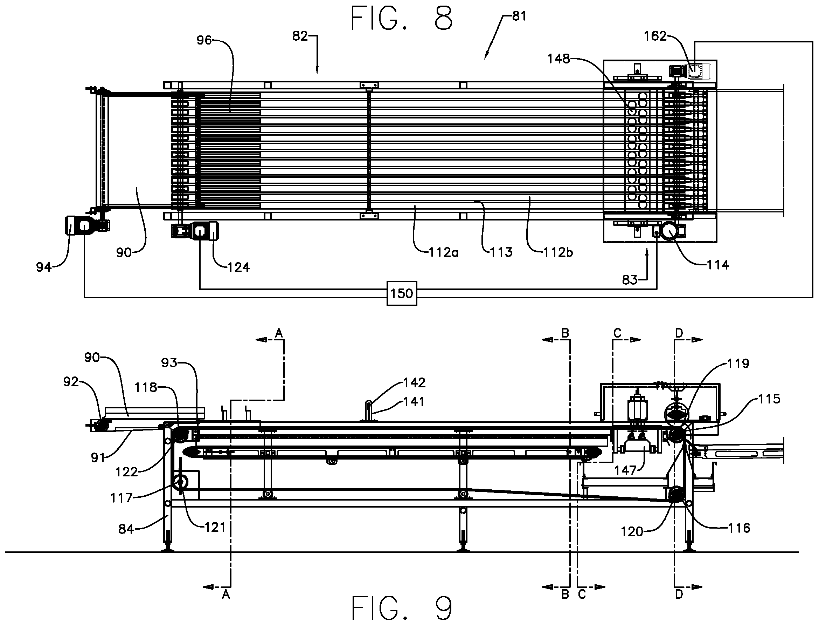

Figures 8-14 show a further embodiment of the present invention. This embodiment corresponds to the embodiment described above with reference to figures 1-4, except in respect of some aspects as described in the following. Assembly 81 comprises a device 82 for transporting and ordering supplied products and a cutting unit 83 for separating parts of the products from each other. Assembly 81 further comprises a feed which comprises a feed conveyor 90 provided with an endless conveyor belt for transporting the products to device 82. Feed conveyor 90 comprises an endless conveyor belt 91 which can be transported on rollers 92,93. Roller 92 is driven by an electric motor 94. Provided at the discharge end of feed conveyor 90 are stationary parallel partitions 96. These ensure that the products are supplied in separate rows and thus move onto device 82.

Transport device 82 comprises a frame 84 on which a number of elongate endless conveyor belts 112 are arranged. Provided in the shown embodiment are fourteen conveyor belts 112. Formed between the fourteen conveyor belts are thirteen intermediate spaces 113. Each intermediate space 113 forms a track for transporting a row of products supplied via feed conveyor 90. It will be apparent that the number of tracks, and thereby the number of conveyor belts 112, can vary as required.

Endless conveyor belts 112 are guided along a number of rollers 115, 116, 117 and 118 which are connected, optionally fixedly, to respective common shafts 119, 120, 121 and 122. Shafts 119 and 122 are driven respectively by drive motor 114 and drive motor 124.

In the shown embodiment drive motor 114 is connected via the common drive shaft 119 to a number of the rollers 115 such that a set of first conveyor belts 112a is driven thereby. In similar manner drive motor 124 is connected via common drive shaft 122 to a number of rollers 118 so that the second drive motor 124 can displace a second set of conveyor belts 112b. The displacement of conveyor belts 112a and 112b can be realized independently of each other. Because conveyor belts 112a and 112b are driven alternately by motors 114 and 124, the conveyor belts of a determined track can be advanced at different speeds.

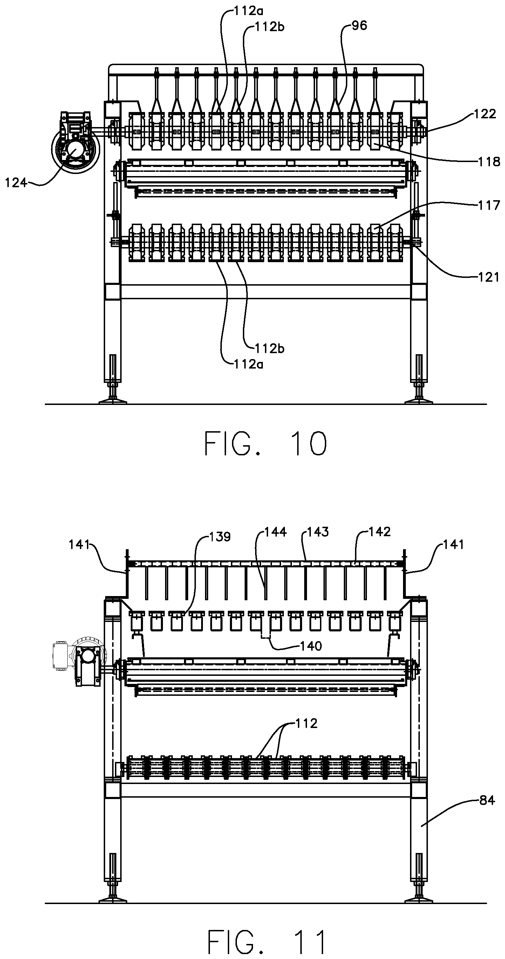

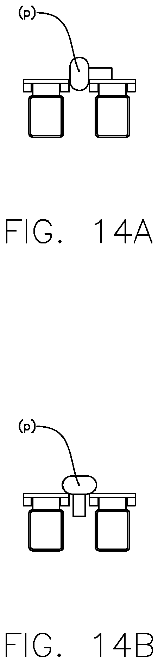

Referring to figure 11, side edges 139 of a set of conveyor belts 112a, 112b define a recessed receiving space 140 (shown with broken lines in figure 11) in which the products can be at least partially received. The products enter receiving space 140 between conveyor belts 112a, 112b via feed conveyor 90. The position in which the products come to lie therein cannot be predicted beforehand. Figures 14A and 14B show a few of the possible positions.

It is necessary to order the products in the receiving space in a desired end position so as to enable cutting of the products at the desired positions. This can be realized inter alia by alternately giving conveyor belts 112a and 112b different speeds. A rotating movement is imparted to the products by the difference in speed. The products continue to turn until the stems of the majority thereof drop into the intermediate space 140 between conveyor belts 112a, 112b. When for instance a product (p) comes to lie in the position shown in figure 14A by means of the feed conveyor, the speed difference between belts 112a and 112b will enable the product to turn until in a substantial number of cases, up to more than 90% of cases, the product (p) comes to lie in the position shown in figure 14B. Once in this position, the speed difference between conveyor belts 112a, 112b has essentially no further effect on the position of the product. The product will then remain in the position shown in figure 14B for the remaining part of the transport phase.

In order to increase the chance that the stems will in fact hang downward, in a determined embodiment control 150 of drive motors 114, 124 can be embodied such that the speed of the conveyor belts is periodically adjusted. In determined embodiments the speeds are for instance adjusted every 1 to 5 seconds. In a specific embodiment the transport members have essentially two speeds, a high speed and a low speed. The first and second transport members then start with respectively a high and low speed. After a first time interval (of for instance 2 seconds) the control controls the drive motors such that the speeds are switched. The first transport member is given the low speed and the second transport member is given the high speed. This process of switching speeds is repeated in each case so that the products are confronted in each case with changing speeds of the transport members.

In other embodiments control 150 can be embodied such that the speeds vary between an adjustable high and adjustable low speed, wherein the high speed of conveyor belts 112a is always faster than that of conveyor belts 112b. In determined further embodiments the time interval at which this takes place is likewise adjustable. It is also possible to choose a small time interval such that the speed adjustment of conveyor belt 112a, 112b takes place in jolting manner. The result hereof is that the products rotate back a little after each time interval, whereby the products which are pressed with a stem against the side of a conveyor belt 112a or 112b are also given the opportunity to rotate to a downward position of the stem.

Halfway along transport device 82 two brackets 141 are arranged on frame 84. Brackets 141 support a beam 142 on which a number of pivotable elements 143 are arranged. The pivotable elements, also referred to here as pivot arms, further comprise elongate outer ends 144. These have a length and are positioned relative to the tracks such that they rotate a product whose stem is directed upward to a position in which the stem is displaced downward. This is done to facilitate the severing further along (as is described below).

In the embodiment of figures 1-7 the products on transport device 2 are first cut through in vertical direction by means of cutting knives 59 and subsequently in horizontal direction by means of a number of knives on a cutting beam 55. In the embodiment of figures 8-14 the products are however first severed in horizontal direction by means of the cutting beam and then cut through in the vertical direction by means of cutting knives.

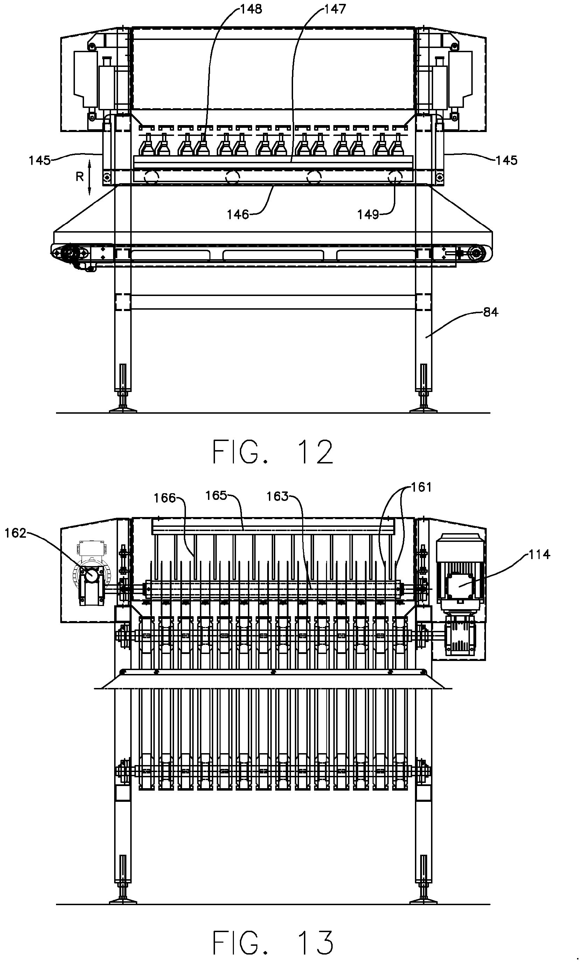

Referring particularly to figures 8 and 12, the cutting beam 147, which is arranged under transport members 112 and is stationary in use, comprises a number of knife units 148 with which the products can be severed on the underside of transport members 112. The cutting beam comprises a rectangular support block 147 which is accommodated movably by means of a number of rollers 149 in a profile 146 extending transversely of the direction of transport. Profile 146 is mounted on frame 84 using height-adjustable brackets 145. The brackets are displaceable in up and downward direction (direction R, figure 12) so that the height at which the stems of the products are severed can be adjusted as required.

A cutting unit is provided for the purpose of also cutting the products in vertical direction, for instance mushrooms whose stem does not extend into receiving space 140. The cutting unit comprises rotatable cutting knives 161 (figure 13) which are arranged such that the products can be cut at the correct positions. The cutting knives are mounted on a rotatable shaft 163, this shaft being driven via an electric motor 162.

Arranged above the cutting unit is a beam 165 with a number of pins 166 directed vertically downward. Pins 166 ensure that possible (residues of) products are removed from between the blades.

The present invention is not limited to the embodiments thereof described herein. The rights sought are defined by the following claims, within the scope of which numerous modifications and adaptations can be envisaged.

## Claims

1. Device for processing agricultural products, in particular mushrooms, wherein the product generally comprises a head and a stem, the device comprising a transport track for transporting products from a feed to a processing unit, wherein the transport track comprises:
- endless elongated belt-like, string-like or cable-like transport members (12a, 12b; 112a, 112b) for transporting the products in jointly supported manner;
- a drive (14,24;114,124) for moving the transport members;
- a control (150) for controlling the drive, wherein the control is adapted to drive a first elongated transport member (12a;112a) at a first speed and a second elongated transport member (12b; 112b) at a second speed, the first speed being different from the second speed, so as to impart a rotating movement to the products;
**characterized in that**
- the transport members extend adjacently with some mutual distance, wherein the transport members comprise side edges (39,139) defining an intermediate space (40,140) between the transport members; and **in that**
- the mutual distance between the transport members is configured to allow stems of the products to drop into the intermediate space (40,140) when the products are rotated by the transport members moving at different speeds, the heads of the products being supported on the transport members.

2. Device as claimed in claim 1, wherein the endless elongated transport members are transport conveyor belts.

3. Device as claimed in claim 1 or 2, wherein the transport members are positioned adjacently at the same height.

4. Device as claimed in claim 1, wherein the first speed is higher than the second speed in a first time interval and the second speed is higher than the first speed in a second time interval.

5. Device as claimed in claim 1, wherein the control is adapted to vary, preferably continuously, the speed of at least one of the transport members.

6. Device as claimed in any of the foregoing claims, wherein the control is adapted to vary the speed of the first and second transport members between minimum and maximum speeds, wherein the maximum speed of the first transport member is higher than the maximum speed of the second transport member.

7. Device as claimed in any of the foregoing claims, wherein the speeds and/or the rate of speed variation of the transport members are individually adjustable, wherein the control is preferably adapted to drive at least one of the transport members in jolting manner.

8. Device as claimed in any of the foregoing claims, wherein the transport members and the receiving member are embodied for the purpose of turning the product during transport.

9. Device as claimed in any of the foregoing claims, comprising one or more receiving members extending at least partially between the transport members, wherein the receiving members extend at a lower level than the upper sides of the belt-like transport members for the purpose of forming a recessed receiving space in which the heads of the products can be received; wherein the intermediate space(s) between the receiving members and/or between a receiving member and an adjacent transport member are preferably smaller than the intermediate space between adjacent transport members, wherein the device preferably also comprises level adjusting means for adjusting the height level of the receiving members relative to the transport members, wherein the device is preferably embodied for the purpose of turning the stems of the products so as to place the stems substantially parallel to the transport members.

10. Device as claimed in any of the foregoing claims, wherein the width of the intermediate space between adjacent transport members amounts to between about 20 and 35 mm and/or wherein the intermediate space between the transport members forms a completely open space in which parts of the products can extend.

11. Device as claimed in any of the foregoing claims, comprising pivotable elements positioned above the transport members, wherein the pivotable elements are arranged so as to urge a product, the stem of which is oriented upward, to a position in which the stem is displaced downward.

12. Device as claimed in any of the foregoing claims, comprising a sensor for generating a first signal representative of the height and/or length of a product transported therealong, a processing unit for processing the first signal, comparing the height and/or length to respectively a preset maximum height and/or a preset maximum length and generating a second signal representative of the result of the one or more comparisons, preferably also comprising removing means, in particular a blow nozzle for generating a fluid flow, connected to the processing unit, wherein the removing means are embodied to remove from the transport track a product greater than the maximum height and/or length.

13. Assembly for processing products, comprising:
- a device (1) as claimed in any of the foregoing claims;
- a processing unit for processing the products transported and ordered via the device,
wherein the processing unit preferably comprises a cutting unit for cutting the stems from the products.

14. Method for processing agricultural products, in particular mushrooms, preferably in a device (1) as claimed in any of the foregoing claims, wherein the product generally comprises a head and a stem, the method comprising of ordering products on a transport track and transporting thereof to a processing unit, wherein ordering of the products on the transport track comprises of jointly supporting the products on adjacently positioned elongated endless transport members (12a;12b; 112a,112b) and wherein the transport comprises of driving the elongated endless transport members at different speeds for the purpose of imparting a rotating movement to the products during transport; **characterized by**
rotating the products such that the stems of the products drop into the intermediate space between the transport members moving at different speeds while the heads of the products are supported on the transport members.

15. Method as claimed in claim 14, comprising of varying the speed, particularly varying the speed in jolting manner, of at least one of the transport members during the further transport and/or guiding the products along the processing unit for processing thereof.

## Patentansprüche

1. Vorrichtung zur Verarbeitung landwirtschaftlicher Produkte, insbesondere Pilze, wobei das Produkt im Allgemeinen einen Kopf und einen Stiel umfasst, wobei die Vorrichtung eine Transportstrecke zum Transportieren der Produkte von einem Zufuhrabschnitt zu einer Verarbeitungseinheit umfasst, wobei die Transportstrecke Folgendes umfasst:
- endlose längliche riemenartige, schnurartige oder kabelartige Transportelemente (12a, 12b; 112a, 112b) zum gemeinsam abgestützten Transportieren der Produkte;
- einen Antrieb (14, 24; 114, 124) zum Bewegen der Transportelemente;
- eine Steuerung (150) zum Steuern des Antriebs, wobei die Steuerung dazu ausgelegt ist, ein erstes längliches Transportelement (12a; 112a) mit einer ersten Geschwindigkeit und ein zweites längliches Transportelement (12b; 112b) mit einer zweiten Geschwindigkeit anzutreiben, wobei die erste Geschwindigkeit sich von der zweiten Geschwindigkeit unterscheidet, um den Produkten eine Drehbewegung zu verleihen;
**dadurch gekennzeichnet**
- **dass** die Transportelemente sich mit einem gewissen gegenseitigen Abstand nebeneinander erstrecken, wobei die Transportelemente Seitenkanten (39, 139) umfassen, die einen Zwischenraum (40, 140) zwischen den Transportelementen definieren; und
- **dass** der gegenseitige Abstand zwischen den Transportelementen so konfiguriert ist, dass die Stiele der Produkte in den Zwischenraum (40, 140) fallen können, wenn die Produkte von den Transportelementen gedreht werden, die sich mit unterschiedlichen Geschwindigkeiten bewegen, wobei die Köpfe der Produkte durch die Transportelemente abgestützt werden.

2. Vorrichtung nach Anspruch 1, wobei die endlosen länglichen Transportelemente Transportförderbänder sind.

3. Vorrichtung nach Anspruch 1 oder 2, wobei die Transportelemente nebeneinander auf derselben Höhe positioniert sind.

4. Vorrichtung nach Anspruch 1, wobei die erste Geschwindigkeit in einem ersten Zeitintervall höher als die zweite Geschwindigkeit und die zweite Geschwindigkeit in einem zweiten Zeitintervall höher als die erste Geschwindigkeit ist.

5. Vorrichtung nach Anspruch 1, wobei die Steuerung dazu ausgelegt ist, die Geschwindigkeit mindestens eines der Transportelemente vorzugsweise kontinuierlich zu variieren.

6. Vorrichtung nach einem der vorstehenden Ansprüche, wobei die Steuerung dazu ausgelegt ist, die Geschwindigkeit des ersten und des zweiten Transportelements zwischen minimalen und maximalen Geschwindigkeiten zu variieren, wobei die maximale Geschwindigkeit des ersten Transportelements höher als die maximale Geschwindigkeit des zweiten Transportelements ist.

7. Vorrichtung nach einem der vorstehenden Ansprüche, wobei die Geschwindigkeiten und/oder die Geschwindigkeitsänderungsrate der Transportelemente individuell einstellbar sind, wobei die Steuerung vorzugsweise so ausgelegt ist, dass sie mindestens eines der Transportelemente ruckartig antreibt.

8. Vorrichtung nach einem der vorstehenden Ansprüche, wobei die Transportelemente und das empfangende Element so ausgeführt sind, dass das Produkt sich während des Transports drehen kann.

9. Vorrichtung nach einem der vorstehenden Ansprüche, mit einem oder mehreren Aufnahmeelementen, die sich zumindest teilweise zwischen den Transportelementen erstrecken, wobei sich die Aufnahmeelemente auf einem niedrigeren Niveau als die Oberseiten der riemenartigen Transportelemente erstrecken, um so einen vertieften Aufnahmeraum auszubilden, in dem die Köpfe der Produkte aufgenommen werden können;
wobei der Zwischenraum bzw. die Zwischenräume zwischen den Empfangselementen und/oder zwischen einem Aufnahmeelement und einem benachbarten Transportelement vorzugsweise kleiner ist bzw. sind als der Zwischenraum zwischen benachbarten Transportelementen, wobei die Vorrichtung vorzugsweise auch Niveaueinstellungsmittel zum Einstellen des Höhenniveaus der Aufnahmeelemente relativ zu den Transportelementen umfasst, wobei die Vorrichtung vorzugsweise so ausgeführt ist, dass sie die Stiele der Produkte drehen kann, damit sich die Stiele im Wesentlichen parallel zu den Transportelementen ausrichten.

10. Vorrichtung nach einem der vorstehenden Ansprüche, wobei die Breite des Zwischenraums zwischen benachbarten Transportelementen in einem Bereich von etwa 20 bis 35 mm beträgt und/oder wobei der Zwischenraum zwischen den Transportelementen einen vollständig offenen Raum bildet, in dem Teile der Produkte sich erstrecken können.

11. Vorrichtung nach einem der vorstehenden Ansprüche, mit schwenkbaren Elementen, die über den Transportelementen positioniert sind, wobei die schwenkbaren Elemente so angeordnet sind, dass ein Produkt, dessen Stiel nach oben ausgerichtet ist, in eine Position gebracht wird, in der sich der Stiel nach unten verschoben befindet.

12. Vorrichtung nach einem der vorstehenden Ansprüche, mit einem Sensor zum Erzeugen eines ersten Signals, das für die Höhe und/oder die Länge eines davor transportierten Produkts repräsentativ ist, einer Verarbeitungseinheit zum Verarbeiten des ersten Signals, zum Vergleichen der Höhe und/oder der Länge mit jeweils einer voreingestellten maximalen Höhe und/oder einer voreingestellten maximalen Länge und zum Erzeugen eines zweiten Signals, das für das Ergebnis des einen oder der mehreren Vergleiche repräsentativ ist, und vorzugsweise auch mit Entfernungsmitteln, insbesondere einer Blasdüse zum Erzeugen eines Fluidstroms, die mit der Verarbeitungseinheit verbunden sind, wobei die Entfernungsmittel so ausgeführt sind, dass sie ein Produkt von der Transportstrecke entfernen, das größer als die maximale Höhe und/oder Länge ist.

13. Einrichtung zur Verarbeitung von Produkten, mit:
- einer Vorrichtung (1) nach einem der vorstehenden Ansprüche;
- einer Verarbeitungseinheit zur Verarbeitung der über die Vorrichtung transportierten und angeordneten Produkte, wobei die Verarbeitungseinheit vorzugsweise eine Schneideinheit zum Abschneiden der Stiele der Produkte umfasst.

14. Verfahren zur Verarbeitung landwirtschaftlicher Produkte, insbesondere Pilze, vorzugsweise in einer Vorrichtung (1) nach einem der vorstehenden Ansprüche, wobei das Produkt im Allgemeinen einen Kopf und einen Stiel umfasst, wobei das Verfahren das Anordnen der Produkte auf einer Transportstrecke und das Transportieren davon zu einer Verarbeitungseinheit umfasst, wobei das Anordnen der Produkte auf der Transportstrecke das gemeinsame Abstützen der Produkte auf benachbart positionierten endlosen länglichen Transportelementen (12a, 12b; 112a, 112b) umfasst und wobei das Transportieren das Antreiben der endlosen länglichen Transportelemente mit unterschiedlichen Geschwindigkeiten umfasst, um den Produkten während des Transports eine Drehbewegung zu verleihen;
**gekennzeichnet durch**
ein Drehen der Produkte, so dass die Stiele der Produkte in den Zwischenraum zwischen den Transportelementen fallen, die sich mit unterschiedlichen Geschwindigkeiten bewegen, während die Köpfe der Produkte **durch** die Transportelemente abgestützt sind.

15. Verfahren nach Anspruch 14, umfassend das Variieren der Geschwindigkeit, insbesondere das ruckartige Variieren der Geschwindigkeit mindestens eines der Transportelemente während des weiteren Transports und/oder des Führens der Produkte entlang der Verarbeitungseinheit zur Verarbeitung davon.

## Revendications

1. Dispositif de traitement de produits agricoles, notamment de champignons, le produit comprenant globalement une tête et une tige, le dispositif comprenant une voie de transport destinée au transport des produits depuis une section d'apport jusqu'à une unité de traitement, la voie de transport comprenant :
- des éléments de transport sans fin allongés en forme de bande, de fil ou de câble (12a, 12b ; 112a, 112b) destinés à transporter les produits selon un support conjoint ;
- un entraînement (14, 24 ; 114, 124) destiné à déplacer les éléments de transport ;
- un organe de commande (150) destiné à commander l'entraînement, ledit organe de commande étant apte à entraîner un premier élément de transport allongé (12a ; 112a) à une première vitesse et un deuxième élément de transport allongé (12b ; 112b) à une deuxième vitesse, la première vitesse étant différente de la deuxième vitesse, de manière à conférer un mouvement de rotation aux produits ;
**caractérisé en ce que**
- les éléments de transport s'étendent de manière adjacente avec une certaine distance mutuelle, les éléments de transport comprenant des bords latéraux (39, 139) définissant un espace intermédiaire (40, 140) entre lesdits éléments de transport ; et **en ce que**
- la distance mutuelle entre les éléments de transport est conçue pour permettre à la tige des produits de tomber dans l'espace intermédiaire (40, 140) lorsque les produits sont mis en rotation par les éléments de transport se déplaçant à des vitesses différentes, la tête des produits étant supportée par les éléments de transport.

2. Dispositif selon la revendication 1, dans lequel les éléments de transport sans fin allongés sont des bandes de transport.

3. Dispositif selon la revendication 1 ou 2, dans lequel les éléments de transport sont disposés adjacents à la même hauteur.

4. Dispositif selon la revendication 1, dans lequel la première vitesse est supérieure à la deuxième vitesse dans un premier intervalle de temps et la deuxième vitesse est supérieure à la première vitesse dans un deuxième intervalle de temps.

5. Dispositif selon la revendication 1, dans lequel l'organe de commande est apte à faire varier, de préférence en continu, la vitesse d'au moins un des éléments de transport.

6. Dispositif selon l'une quelconque des revendications précédentes, dans lequel l'organe de commande est apte à faire varier la vitesse des premier et deuxième éléments de transport entre des vitesses minimales et maximales, la vitesse maximale du premier organe de transport étant supérieure à la vitesse maximale du deuxième élément de transport.

7. Dispositif selon l'une quelconque des revendications précédentes, dans lequel les vitesses et/ou le taux de variation de vitesse des éléments de transport sont réglables individuellement, l'organe de commande étant de préférence apte à entraîner au moins un des éléments de transport par secousses.

8. Dispositif selon l'une quelconque des revendications précédentes, dans lequel les éléments de transport et l'élément de réception sont conçus dans le but de faire tourner le produit pendant le transport.

9. Dispositif selon l'une quelconque des revendications précédentes, comprenant un ou plusieurs éléments de réception s'étendant au moins partiellement entre les éléments de transport, les éléments de réception s'étendant à un niveau inférieur par rapport aux côtés supérieurs des éléments de transport en forme de bande dans le but de former un espace de réception en retrait dans lequel la tête des produits peut être reçue ;
le ou les espaces intermédiaires présents entre les éléments de réception et/ou entre un élément de réception et un élément de transport adjacent étant de préférence plus petits que l'espace intermédiaire présent entre des éléments de transport adjacents, ledit dispositif comprenant de préférence également un moyen de réglage de niveau permettant de régler le niveau de hauteur des éléments de réception par rapport aux éléments de transport, ledit dispositif étant de préférence conçu dans le but de faire tourner la tige des produits pour faire en sorte que les tiges soient sensiblement parallèles aux éléments de transport.

10. Dispositif selon l'une quelconque des revendications précédentes, dans lequel la largeur de l'espace intermédiaire présent entre les éléments de transport adjacents est comprise entre environ 20 et 35 mm et/ou dans lequel l'espace intermédiaire présent entre les éléments de transport forme un espace complètement ouvert dans lequel des parties des produits peuvent s'étendre.

11. Dispositif selon l'une quelconque des revendications précédentes, comprenant des éléments pivotants disposés au-dessus des éléments de transport, les éléments pivotants étant agencés de manière à pousser un produit, dont la tige est orientée vers le haut, vers une position dans laquelle la tige est déplacée vers le bas.

12. Dispositif selon l'une quelconque des revendications précédentes, comprenant un capteur destiné à générer un premier signal représentatif de la hauteur et/ou de la longueur d'un produit transporté le long de celui-ci, une unité de traitement destinée à traiter le premier signal, à comparer respectivement la hauteur et/ou la longueur à une hauteur maximale prédéfinie et/ou à une longueur maximale prédéfinie et à générer un deuxième signal représentatif du résultat de la ou des comparaisons, le dispositif comprenant également de préférence un moyen de retrait, notamment une buse de soufflage permettant de générer un flux de fluide, lequel moyen est raccordé à l'unité de traitement, ledit moyen de retrait étant conçu pour retirer de la voie de transport un produit dépassant la hauteur et/ou la longueur maximales.

13. Ensemble destiné au traitement de produits, comprenant :
- un dispositif (1) selon l'une quelconque des revendications précédentes ;
- une unité de traitement destinée à traiter les produits transportés et agencés au moyen du dispositif, l'unité de traitement comprenant de préférence une unité de coupe permettant de couper la tige des produits.

14. Procédé de traitement de produits agricoles, notamment de champignons, de préférence dans un dispositif (1) selon l'une quelconque des revendications précédentes, le produit comprenant globalement une tête et une tige, le procédé comprenant l'agencement des produits sur une voie de transport et leur transport en direction d'une unité de traitement, ledit agencement des produits sur la voie de transport comprenant un support conjoint des produits sur des éléments de transport sans fin allongés (12a, 12b ; 112a, 112b) disposés adjacents les uns aux autres, et ledit transport comprenant l'entraînement des éléments de transport sans fin allongés à différentes vitesses dans le but de conférer un mouvement de rotation aux produits pendant le transport ;
**caractérisé par**
la rotation des produits de façon que la tige des produits tombe dans l'espace intermédiaire présent entre les éléments de transport se déplaçant à des vitesses différentes tandis que la tête des produits est supportée par les éléments de transport.

15. Procédé selon la revendication 14, comprenant la variation de la vitesse, notamment la variation de la vitesse par secousses, d'au moins un des éléments de transport pendant le transport ultérieur et/ou le guidage des produits le long de l'unité de traitement en vue de leur traitement.
